# DEMANDE DE BREVET EUROPEEN

(11) **EP 3 865 021 A1**
(43) Date de publication de la demande: **18.08.2021**
(21) Numéro de dépôt: 21156916.5
(22) Date de dépôt: 12.02.2021
(51) Int. Cl.: A47J 31/44, A47J 42/40, A47J 42/44

(54) **SYSTÈME DE PRÉPARATION DE CAFÉ OPTIMISÉ**

(30) Priorité: 12.02.2020 FR 2001391
(71) Demandeur: Reneka International, 67560 Rosheim (FR)
(72) Inventeur: OGUZ, Halil Önder, 83233 Bernau am Chiemsee (DE)
(74) Mandataire: Merckling, Norbert

(57) **Abrégé**

L'invention concerne un système de préparation de café (1) comprenant au moins une machine de préparation de café comportant une groupe d'injection (2), un bloc mécanique (3) et au moins un porte-filtre (4) destiné à contenir une dose de mouture, monté de façon amovible sur le bloc mécanique, une unité de commande pour piloter le fonctionnement de ladite machine de préparation de café, au moins un moulin (8) pour broyer les graines de café et fournir ainsi la mouture, une unité de commande pour piloter le fonctionnement du moulin (8) et des moyens pour sélectionner des doses de mouture, caractérisé en ce qu'il comprend un jeu de plusieurs porte-filtre (4) comportant chacun une passoire (6) dont le volume est adapté à une dose spécifique de mouture, chacun des porte-filtres (4) étant pourvu d'un élément d'identification (i1, i2, i3) visible par l'utilisateur et d'un élément d'identification complémentaire pouvant être identifié par un dispositif de lecture automatique prévu sur le moulin (8).

## Description

### Domaine technique

L'invention se rapporte au domaine technique général des dispositifs, systèmes ou machines permettant de préparer des boissons chaudes et plus particulièrement du café. De tels systèmes permettent de préparer différents types de café, par exemple des cafés du genre expresso, double expresso, longs ou allongés.

Ces systèmes comprennent en général une machine de préparation de café et un moulin pour préparer la mouture de café à partir de graines de café.

### Technique antérieure

On connaît des systèmes de préparation de café dans lesquels la mouture est préparée par un moulin puis déposée dans un porte-filtre. Ce dernier est ensuite monté sur un porte-coupe de la machine de préparation de café.

Ces diverses manipulations sont compliquées et peuvent conduire à des erreurs de dosage, en particulier lorsque l'utilisateur doit choisir un porte-filtre parmi un ensemble de porte-filtres différents présentant chacun un volume adapté à une dose spécifique de mouture.

### Présentation de l'invention

L'objet de la présente invention vise par conséquent à pallier les inconvénients de l'art antérieur et de proposer un nouveau système de préparation de café, pour simplifier son utilisation et limiter les risques de mauvaises manipulations de l'utilisateur et conserver dans le temps la qualité du café préparé.

Un autre objet de la présente invention vise à proposer un système de préparation de café dont le fonctionnement et la coopération entre un moulin et une machine de préparation de café sont optimisés.

Les objets assignés à l'invention sont atteints à l'aide d'un système de préparation de café comprenant au moins une machine de préparation de café comportant une groupe d'injection, un bloc mécanique présentant un porte-coupe et au moins un porte-filtre destiné à contenir une dose de mouture, ledit porte-filtre étant monté de façon amovible sur le porte-coupe du bloc mécanique, une unité de commande pour piloter le fonctionnement de ladite machine de préparation de café, au moins un moulin pour broyer les graines de café et fournir ainsi la mouture, une unité de commande pour piloter le fonctionnement du moulin et des moyens pour sélectionner des doses de mouture, caractérisé en ce qu'il comprend un jeu de plusieurs porte-filtre comportant chacun une passoire dont le volume différent est adapté à une dose spécifique de mouture, chacun des porte-filtres étant pourvu d'un élément d'identification distinct visible par l'utilisateur et d'un élément d'identification complémentaire pouvant être identifié par un dispositif de lecture automatique prévu sur le moulin.

Selon un exemple de réalisation, la machine de préparation de café comporte un dispositif de lecture automatique identique à celui du moulin.

Selon un exemple de réalisation, l'élément d'identification des porte-filtres est un code couleurs ou un signe numérique, alphabétique ou alphanumérique.

Selon un exemple de réalisation, l'élément d'identification complémentaire est une puce, du genre puce RFID.

Selon un exemple de réalisation, l'élément d'identification complémentaire est un organe mécanique destiné à coopérer avec un capteur de présence ou de contact localisé sur le moulin.

Selon un exemple de réalisation, le dispositif de lecture est un capteur de présence ou un capteur de contact ou un lecteur de puce RFID.

Selon un exemple de réalisation, le moulin et/ou la machine de préparation de café sont actionnés automatiquement avec des paramètres de fonctionnement correspondant aux informations lues par le dispositif de lecture, lesquelles sont compatibles avec la dose de mouture contenue dans le porte-filtre identifié.

Selon un exemple de réalisation, le moulin comporte un mécanisme de broyage rotatif associé à un dispositif de prélèvement intégrant un dispositif de pesée pour prélever un poids déterminé de graines de café destinées au mécanisme de broyage.

Selon un exemple de réalisation, les unités de commande du moulin et de la machine de préparation de café comprennent chacune une carte électronique comportant une micro-mémoire dans laquelle sont stockés des paramètres physiques et/ou des paramètres de fonctionnement et/ou des valeurs seuil et/ou des valeurs de référence.

Un avantage du système de préparation de café conforme à l'invention réside dans la simplicité de son utilisation, laquelle permet de limiter de manière remarquable les risques d'erreurs de la part de l'utilisateur. En effet, l'utilisateur se contente de choisir le porte-filtre adéquat, correspondant au café souhaité, le fonctionnement du moulin et de la machine de préparation de café peuvent alors être automatisés évitant ainsi de mauvaises manipulations dudit utilisateur.

Un autre avantage du procédé de commande réside dans sa simplicité et son automatisme. En effet, le système de préparation de café s'adapte automatiquement aux conditions et paramètres de préparation. L'utilisateur n'a pas à effectuer des réglages et des essais longs et compliqués pour obtenir une qualité optimale de café. En effet, le système de préparation de café conforme à l'invention permet de mettre en œuvre un procédé commande se basant notamment sur l'ajustement automatisé des durées d'écoulement d'eau à travers la mouture.

### Brève description des figures

D'autres caractéristiques et avantages de l'invention apparaîtront plus clairement à la lecture de la description détaillée qui va suivre, faite en référence aux dessins annexés, donnés à titre d'exemples non limitatifs, dans lesquels :
- La figure 1 est une illustration schématique d'un exemple de réalisation d'un système de préparation de café conforme à l'invention,
- Les figures 2, 3 et 4 sont une illustration d'un exemple de réalisation d'un jeu de porte-filtres, utilisé dans un système de préparation de café conforme à l'invention,
- La figure 5 est un exemple de logigramme fonctionnel illustrant la mise en œuvre d'un procédé de commande d'un système conforme à l'invention, et
- La figure 6 est un autre exemple de logigramme fonctionnel illustrant la mise en œuvre d'un procédé de commande d'un système conforme à l'invention.

### Description détaillée de l'invention

Les éléments structurellement et fonctionnellement identiques et présents sur plusieurs figures distinctes, sont affectés d'une même référence numérique ou alphanumérique.

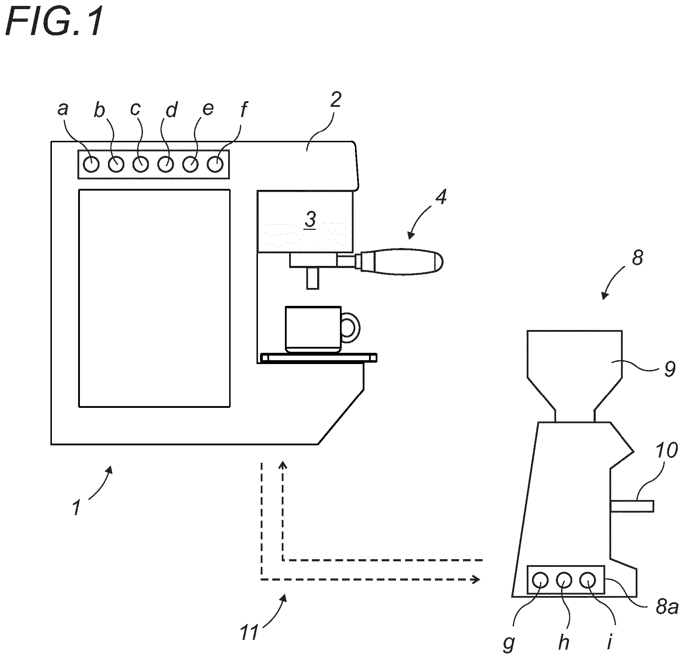

La figure 1, est une illustration schématique d'un exemple de réalisation d'un système de préparation de café. Le système de préparation de café une machine de préparation de café 1, laquelle est connue en tant que telle et ne sera donc pas décrite plus en détails. La machine de préparation de café 1 comporte au moins un groupe d'injection 2 pour injecter de l'eau chaude dans une dose de mouture.

La machine de préparation de café 1 comporte également un bloc mécanique présentant au moins un porte-coupe 3 sur lequel est monté de façon amovible un porte-filtre 4 destiné à être monté de façon amovible sur ledit porte-coupe 3.

La machine de préparation de café présente avantageusement une interface de commande la avec des boutons de commande a, b, c, d, e, f, correspondant chacun à un type de café et/ou à une mouture.

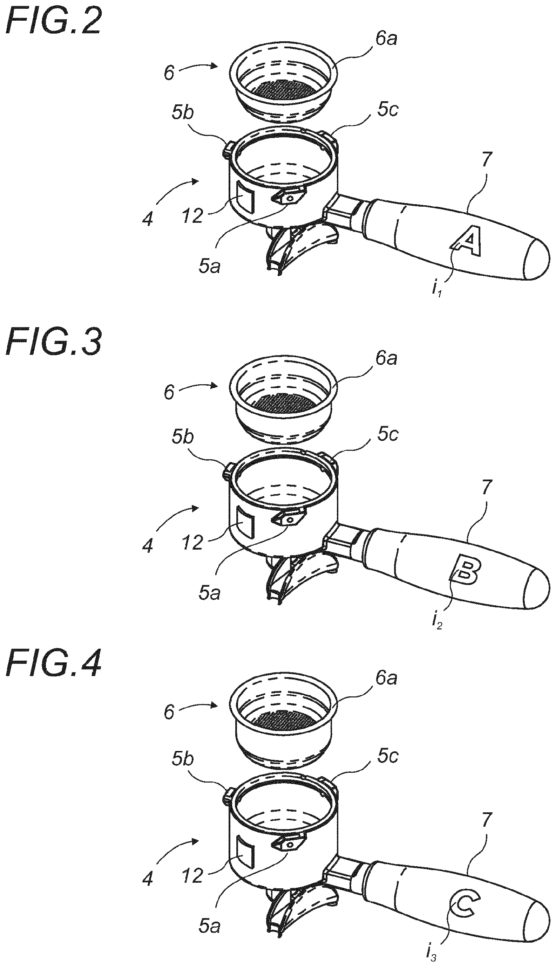

Un exemple de réalisation du porte-filtre 4 est illustré aux figures 2 à 4. Le porte-filtre 4 comporte une coupelle 5 dans laquelle est insérée une passoire 6 à rebord périphérique 6a destinée à contenir la mouture. La coupelle 5 se prolonge avec une poignée de manipulation 7.

La coupelle 5 présente également des ergots de maintien 5a, 5b et 5c s'engageant dans des gorges correspondantes, non représentées ménagées dans le porte-coupe 3, à des fins de solidarisation de ladite coupelle 5.

Le système de préparation de café 1 comprend également un moulin 8 permettant de broyer des graines de café stockées dans un réservoir 9.

Le moulin 8 intègre avantageusement un mécanisme électrique de broyage par rotation et un dispositif pour prélever une quantité donnée ou un poids donné de graines de café pour les amener au mécanisme de broyage. Ce dernier délivre à l'issue de l'opération de broyage une dose de mouture ou un poids donné de mouture. La granulométrie de la mouture peut avantageusement être modifiée en modifiant la vitesse de rotation du mécanisme de broyage et/ou la durée de l'opération de broyage.

Le moulin 8 comporte également un organe de distribution 10 permettant à l'utilisateur de récupérer la dose de mouture directement dans la passoire 6.

Le moulin 8 présente avantageusement une interface de commande 8a avec des organes de commande g, h, i, correspondant chacun à une dose mouture, par exemple de 7g, 14g ou 21g.

Le moulin 8 est avantageusement relié à la machine de préparation de café 1 avec un système de communication incluant une liaison de communication 11 filaire ou non filaire notamment du genre BLUETOOTH, WIFI, WLAN ou autres.

Le moulin 8 et la machine de préparation de café 1 comportent respectivement une unité de commande intégrant notamment des moyens d'émission et de réception d'informations et/ou d'instructions.

Les figures 2, 3 et 4 illustrent un jeu de trois porte-filtres 4 comportant respectivement un élément d'identification visible i1, i2 et i3. Ces éléments sont par exemple constitués par les lettres A, B et C. Chacun des porte-filtres comporte une passoire 6 de volume différent. Ainsi, en fonction du type de café et du poids de mouture correspondante, l'utilisateur saisit le porte-filtre 4 adéquat pour le mettre en place sur le moulin 8.

Les porte-filtres 4 comportent par ailleurs, un élément d'identification complémentaire 12. Ce dernier est avantageusement lu, reconnu ou détecté par un dispositif de lecture, non représenté, prévu sur le moulin 8. L'identification du porte-filtre 4, permet au moulin de préparer automatiquement la dose de mouture adaptée au dit porte-filtre 4 identifié.

Avantageusement, un dispositif de lecture identique à celui du moulin 8 peut être prévu sur la machine de préparation de café 1. Les paramètres de fonctionnement compatibles avec le type de café et avec la dose de mouture peuvent donc être commandés automatiquement dès que le porte-filtre 4 est mis en place et identifié par l'unité de commande de la machine de préparation de café.

Selon un exemple de réalisation du système de préparation de café, la liaison de communication 11 n'est plus utilisée pour activer des touches de commandes a, b, c, d, e, f de la machine de préparation de café 1. La liaison de communication 11 conserve cependant sa fonction consistant à transmettre le cas échéant des instructions de fonctionnement modifiés au moulin 8, de manière à garantir une constance dans le volume de chaque type de café préparé.

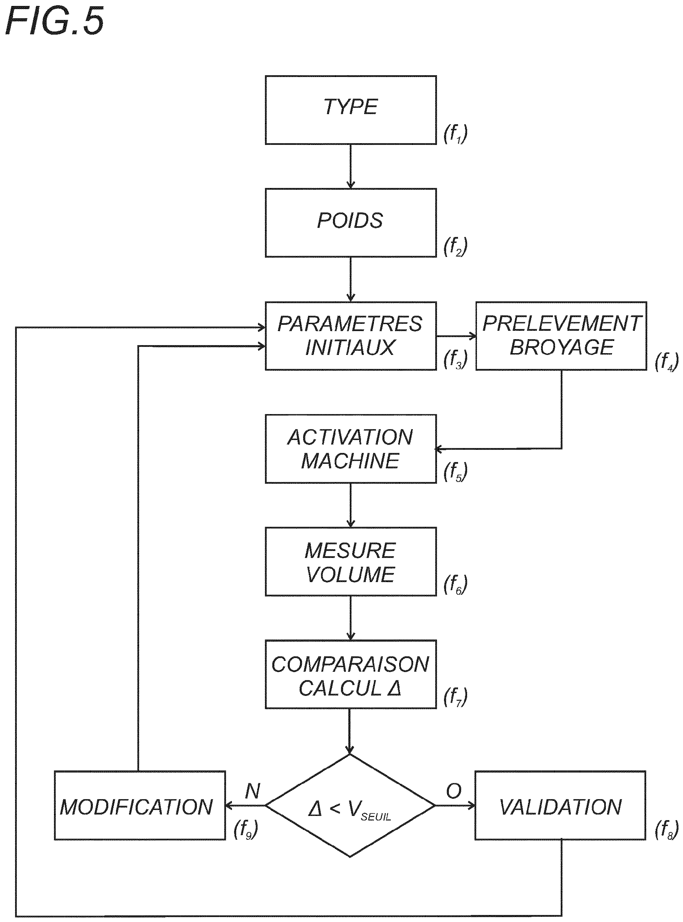

La figure 5 est un exemple de logigramme fonctionnel illustrant un exemple de mise en œuvre du procédé de commande du système de préparation de café.

Le procédé de commande du système de préparation de café comprenant au moins une machine de préparation de café 1 et au moins un moulin 8 permet de broyer des graines de café contenues dans le réservoir 9 et fournir une dose de mouture. Le procédé de commande est détaillé ci-après.

Selon une étape f1), on sélectionne sur le moulin 8 à l'aide d'organes de commande g, h, i, le type de café souhaité.

Selon une étape f2), on sélectionne sur le moulin 8, à l'aide d'organes de commande g, h, i, le poids correspondant de la mouture.

Selon une étape f3) on sélectionne les paramètres de fonctionnement initiaux du moulin 8. Cette sélection est effectuée automatiquement par l'unité de commande du moulin 8.

Ensuite selon une étape f4), on prélève la quantité correspondante de graines de café à partir du réservoir 9 et on lance l'opération de broyage des graines de café, en fonction des paramètres de fonctionnement initiaux du moulin 8, afin de fournir le poids de mouture souhaité. Les paramètres de fonctionnement initiaux ou standards sont enregistrés dans l'unité de commande du moulin 8.

Selon une étape f5), on utilise le moulin 8, plus précisément son unité de commande, pour transmettre à la machine de préparation de café 1, une instruction d'activation d'au moins une touche de commande parmi les touches de commande a, b, c, d, e, f, de ladite machine de préparation de café 1. L'actionnement de la touche activée est alors possible pour mettre en marche le groupe d'injection 2, lequel injecte de l'eau chaude sous pression dans la mouture pendant une durée prédéterminée considérée comme optimale. A titre d'exemple, une telle durée optimale est de 25s pour un café expresso. La touche de commande activée permet une préparation de café compatible avec le type de café et le poids de la mouture initialement sélectionnés. Les autres touches de commande de la machine de préparation de café 1 sont ou restent inactivées.

Ensuite, selon une étape f6), on mesure le volume de café obtenu suite à l'actionnement de la touche de commande activée. Cette mesure est effectuée par exemple à l'aide d'un dispositif de pesée ou d'un dispositif optique ou autres.

Selon une étape f7), on compare la valeur mesurée du volume de café sous l'étape précédente f6), à une valeur optimale préenregistrée dans l'unité de commande de la machine de préparation de café 1 et on détermine l'écart entre ces deux valeurs.

Selon les étapes f8) et f9), on pilote alors le fonctionnement du moulin 8 à partir de l'écart déterminé sous l'étape précédente f7).

Un tel pilotage consiste à valider (étape f8)) les paramètres de fonctionnement initiaux du moulin 8, lorsque l'écart est inférieur à une valeur seuil prédéterminée Vseuil et à modifier (étape f9)) lesdits paramètres de fonctionnement initiaux du moulin 8, lorsque l'écart est supérieur ou égal à la valeur seuil Vseuil prédéterminée. Cette dernière est avantageusement enregistrée dans l'unité de commande de la machine de préparation de café 1.

Selon un exemple de mise en œuvre, le procédé de commande consiste à utiliser la liaison de communication 11 pour transmettre le cas échéant des instructions de fonctionnement correctives au moulin 8 à partir de la machine de préparation de café 1.

Selon un exemple de mise en œuvre, le procédé consiste à utiliser l'unité de commande de la machine de préparation de café 1 et l'unité de commande du moulin 8, comprenant chacune des moyens de réception et d'émission d'informations et/ou d'instructions de commande.

Selon un exemple de mise en œuvre, le procédé de commande consiste à fournir au moulin 8 des instructions de commandes correctives de manière à modifier pour des sélections données de type de café et de poids de mouture, les paramètres de fonctionnement du moulin 8 pour les opérations de broyages des graines de café.

Selon un exemple de mise en œuvre, le procédé de commande consiste à utiliser des paramètres de fonctionnement comprenant la vitesse de rotation du moulin et/ou la durée de l'opération de broyage des graines de café pour agir sur la granulométrie et la densité de la mouture. Il est aussi possible d'ajouter à ces paramètres de fonctionnement le poids de la mouture.

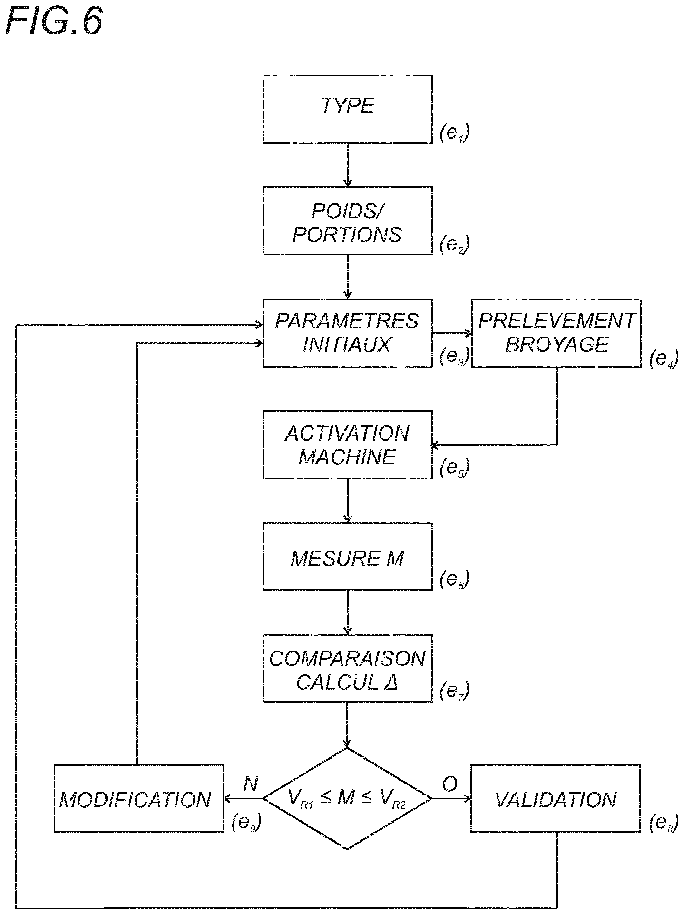

La figure 6 est un autre exemple de logigramme fonctionnel illustrant un exemple de mise en œuvre du procédé de commande du système de préparation de café.

Selon un étape e1), on sélectionne sur le moulin 8 à l'aide de organes de commande g, h, i le type de café souhaité.

Selon une étape e2), on sélectionne sur le moulin 8 à l'aide d'organes de commande g, h, i la les portions correspondant au nombre de doses mouture souhaité,

Ensuite, selon une étape e3), on sélectionne des paramètres de fonctionnement initiaux du moulin 8.

Selon une étape e4), on prélève la quantité correspondante de graines de café à partir du réservoir et on lance l'opération de broyage des graines de café, en fonction des paramètres de fonctionnement initiaux du moulin 8, afin de fournir la ou les doses de la mouture.

Selon une étape e5), on utilise le moulin 8 pour transmettre à la machine de préparation de café 1, une instruction d'activation d'une touche de commande a, b, c, d, e, f de ladite machine de préparation de café 1, l'actionnement de ladite touche activée étant compatible avec le type de café et le nombre sélectionné de doses de la mouture, les autres touches de commande de ladite machine de préparation de café 1 restant inactivées.

Ensuite, selon une étape e6), on mesure le temps d'écoulement M d'une quantité d'eau correspondant aux choix effectué sous e1 et e2), à travers la mouture, suite à l'actionnement de la touche de commande active.

On compare ensuite, selon une étape e7), la valeur mesurée M sous e6) à une plage de valeurs de temps de référence (VR1, VR2) préenregistrée et on détermine l'écart Δ entre la valeur mesurée M et la première valeur de référence VR1 si M est inférieure à VR1 ou entre la seconde valeur de référence VR2 et M si M est supérieure à VR2.

Un étape e8) et une étape e9) consistent alors à piloter le fonctionnement du moulin 8 en fonction de la comparaison effectuée et/ou de l'écart Δ déterminé sous e7).

Selon un exemple de mise en œuvre, le procédé consiste à valider avec l'étape e8) les paramètres de fonctionnement du moulin 8, lorsque la valeur mesurée M est incluse dans la plage de référence (VR1, VR2) ou à modifier avec l'étape e9) lesdits paramètres de fonctionnement du moulin 8, lorsque la valeur mesurée M est inférieure à la première valeur de référence VR1 ou supérieure à la seconde valeur de référence VR2

Selon un exemple de mise en œuvre, le procédé de commande consiste à augmenter la quantité de mouture en augmentant la durée de prélèvement et de broyage des graines de café si la valeur mesurée M est inférieure à la première valeur de référence VR1 ou diminuer la quantité de mouture en augmentant la durée de prélèvement et de broyage des graines de café si la valeur mesurée M est supérieure à la seconde valeur de référence VR2

L'augmentation ou la diminution de la quantité de mouture est par exemple une fonction mathématique donnant la durée de prélèvement et de broyage en fonction de la valeur de l'écart Δ.

Selon un autre exemple de mise en œuvre, l'augmentation ou la diminution de la quantité de mouture est un tableau de correspondance préenregistré donnant les durées de prélèvement et de broyage en fonction de des valeurs de l'écart Δ. Un tel tableau de correspondance est par exemple construit empiriquement.

Dans l'hypothèse où le réservoir 9 serait vide et ne pourrait pas fournir une quantité suffisante de graines de café pour l'opération de broyage, cela se traduirait par une quantité moindre de café moulu dans le porte filtre après la durée de broyage prédéfinie. A titre d'exemple, si cela se traduit par une durée d'écoulement inférieure à 30 %d'une valeur seuil minimale, la machine de préparation de café va générer une alerte visuelle et/ou sonore.

Selon un exemple de mise en œuvre, le procédé de commande comprend également des étapes de paramétrage ou de réglage initial du moulin 8. Ce réglage initial du moulin 8 est effectué au préalable de l'étape e1) consiste à déterminer l'écartement initial de deux meules du moulin 8, lesquelles vont broyer les graines de café. On procède ainsi à un tel réglage manuel de référence de cet écartement et on procède ensuite au broyage d'une quantité déterminée de graines de café pour obtenir un poids de mouture de référence. On mesure ensuite sur la machine de préparation de café 1, la durée d'écoulement d'une quantité déterminée d'eau à travers la mouture. Cette durée doit être incluse dans une plage de référence. Dans le cas contraire, on réajuste manuellement l'écartement des meules et on reprend la mesure. Une fois le réglage initial effectué, ce dernier reste inchangé, indépendamment de l'utilisation de diverses variétés ou natures de graines de café.

Le moulin 8 comprend avantageusement un organe mécanique à actionnement manuel, pour procéder au réglage de l'écartement des meules.

L'unité de commande du moulin 8 permet également d'activer le prélèvement et le broyage concomitant pendant des durées variables, lesquelles sont commandées manuellement, lors d'un fonctionnement autonome, par exemple lors du réglage initial, ou à distance par la machine de préparation de café 1 selon un exemple de fonctionnement connecté.

A titre d'exemples, le tableau ci-après donne, pour différents types de cafés (type recette), des valeurs de référence se rapportant au poids de la mouture, à la durée de broyage estimée, au volume de café dans une tasse, à la durée minimale d'écoulement (valeur de référence VR1) et à la durée maximale d'écoulement (valeur de référence VR2).

| Type Recette | Poids (gr) | Durée estimée (S) broyage moulin | Volume café (ml) Dans la tasse | Durée (S) mini écoulement VR1 | Durée (S) maxi écoulement VR2 |
|---|---|---|---|---|---|
| Expresso | 7 | 2,4 | 40 | 20 | 25 |
| Expresso x 2 | 14 | 4,5 | 80 (40 x 2) | 20 | 25 |
| Café | 8 | 2,7 | 60 | 25 | 30 |
| Café x 2 | 16 | 5 | 120 (60 x 2) | 25 | 30 |
| Café Long | 9 | 2,9 | 100 | 50 | 60 |
| Café Long x 2 | 21 | 5,2 | 200 (100 x 2) | 50 | 60 |

Ainsi lorsque la durée d'écoulement M mesurée ne se situe pas dans la plage de référence (optimale) VR1-VR2, le procédé de commande permet d'effectuer un ajustement du poids en prélevant plus ou moins de graines de café, en augmentant ou en diminuant la durée de prélèvement et de broyage, de manière à ramener la durée d'écoulement M dans la plage de référence.

Il est évident que la présente description ne se limite pas aux exemples explicitement décrits, mais comprend également d'autres modes de réalisation et/ou mise en œuvre. Ainsi, une caractéristique technique décrite ou une étape de mise en œuvre décrite, peut être remplacée respectivement par une caractéristique technique équivalente ou une étape équivalente, sans sortir du cadre et de la portée de l'invention définis par les revendications.

## Revendications

1. Système de préparation de café comprenant au moins une machine de préparation de café comportant une groupe d'injection (2), un bloc mécanique présentant un porte-coupe (3) et au moins un porte-filtre (4) destiné à contenir une dose de mouture, ledit porte-filtre (4) étant monté de façon amovible sur le porte-coupe (3) du bloc mécanique, une unité de commande pour piloter le fonctionnement de ladite machine de préparation de café, au moins un moulin (8) pour broyer les graines de café et fournir ainsi la mouture, une unité de commande pour piloter le fonctionnement du moulin (8) et des moyens pour sélectionner des doses de mouture, **caractérisé en ce qu'**il comprend un jeu de plusieurs porte-filtre (4) comportant chacun une passoire (6) dont le volume différent est adapté à une dose spécifique de mouture, chacun des porte-filtres (4) étant pourvu d'un élément d'identification distinct (il, i2, i3) visible par l'utilisateur et d'un élément d'identification complémentaire pouvant être identifié par un dispositif de lecture automatique prévu sur le moulin.

2. Système selon la revendication 1, **caractérisé en ce que** la machine de préparation de café comporte un dispositif de lecture automatique identique à celui du moulin (8).

3. Système selon la revendication 1 ou 2, **caractérisé en ce que** l'élément d'identification (il, i2, i3) des porte-filtres (4) est un code couleurs ou un signe numérique, alphabétique (A, B, C) ou alphanumérique.

4. Système selon l'une quelconque des revendications 1 à 3, **caractérisé en ce que** l'élément d'identification complémentaire est une puce, du genre RFID.

5. Système selon l'une quelconque des revendications 1 à 3, **caractérisé en ce que** l'élément d'identification complémentaire est un organe mécanique destiné à coopérer avec un capteur de présence ou de contact localisé sur le moulin.

6. Système selon l'une quelconque des revendications 1 à 5, **caractérisé en ce que** le dispositif de lecture est un capteur de présence ou un capteur de contact ou un lecteur de puce RFID.

7. Système selon l'une quelconque des revendications 1 à 6, **caractérisé en ce que** le moulin (8) et/ou la machine de préparation de café sont actionnés automatiquement avec des paramètres de fonctionnement correspondant aux informations lues par le dispositif de lecture, lesquelles sont compatibles avec la dose de mouture contenue dans le porte-filtre (4) identifié.
